# EUROPEAN PATENT APPLICATION

(11) **EP 4 714 800 A1**
(43) Date of publication of application: **25.03.2026**
(21) Application number: 25203188.5
(22) Date of filing: 18.09.2025
(51) Int. Cl.: B62D 35/00, B62D 37/02

(54) **AERODYNAMIC DEVICE FOR A VEHICLE, COMPRISING A PASSIVE FLUIDIC SWITCH AND AN AERODYNAMIC BODY**

(30) Priority: 19.09.2024 GB 202413817
(71) Applicant: McLaren Automotive Limited, Woking Surrey GU21 4YH (GB)
(72) Inventor: Algoo, Robin, Woking, GU21 4YH (GB); Edwards, Roderick David Kendrick, Woking, GU21 4YH (GB)
(74) Representative: Slingsby Partners LLP

(57) **Abstract**

Disclosed is a fluidic switch (100) for deploying an aerodynamic body (102) on a vehicle (400), the fluidic switch comprising: a chamber (103) comprising a first opening (104) for receiving incoming airflow (101) at the fluidic switch; and the aerodynamic body restrained to the chamber; wherein the fluidic switch is configured such that, when the incoming airflow enters the chamber through the first opening stagnation pressure is built up in the chamber, the stagnation pressure applying a force to the aerodynamic body so that the fluidic switch moves the aerodynamic body away from the chamber from a retracted configuration towards a deployed configuration.

## Description

This invention relates to a passive fluidic switch for deploying an aerodynamic body.

Vehicles comprise body panels for covering the internal parts of the vehicle. The body panels may be used to guide the incoming airflow over the vehicle. Additionally, further panels may be attached to the body panels to further guide the incoming airflow over the vehicle. Such panels which guide incoming airflow may be known as aerodynamic bodies. High performance vehicles, such as supercars, may have multiple aerodynamic bodies, with specific designs, to optimise the aerodynamics of the vehicle. The aerodynamic bodies may also be movable relative to one another and/or relative to the vehicle.

Aerodynamic bodies may be located beside one another. This may form a gap between the two aerodynamic bodies. In particular, if the aerodynamic bodies are movable, the gap between two aerodynamic bodies may vary in size and/or shape.

The gap between the two aerodynamic bodies can reduce the aerodynamic efficiency of the aerodynamic bodies. For example, at the edge of an aerodynamic body the airflow may 'fall off' the edge and create a vortex or other turbulent airflow. The gap may also change the local pressure across associated surfaces of the aerodynamic body, negatively affecting the aerodynamic efficiency. This can reduce the lift/downforce and/or increase the drag caused by the aerodynamic bodies. It can therefore be advantageous to bridge the gap between the two aerodynamic bodies to improve the aerodynamics.

The gap between the two aerodynamic bodies may be permanently bridged. However, in certain situations, it can be advantageous to not bridge the gap. For example, an increase in drag, and a change in lift or downforce, may be advantageous during braking.

The gap between the two aerodynamic bodies may be selectively bridged through active mechanical actuation. However, active mechanical actuation can be complicated to control, particularly if the aerodynamic bodies are movable during operation of the vehicle. The control systems required to actively actuate bridging of the gap may therefore be complex. It can therefore be advantageous to avoid the need to actively control the bridging of the gap.

It is therefore desirable for an improved way to bridge the gap between aerodynamic bodies.

The same problems may apply to the aerodynamic bodies themselves which may need to be actuated. Aerodynamic bodies themselves may be actively mechanically actuated. However, active mechanical actuation can be complicated to control, particularly if there are multiple aerodynamic bodies to control. The control systems required to actively actuate the aerodynamic bodies may therefore be complex. It can therefore be advantageous to avoid the need to actively control the actuation of the aerodynamic bodies.

It is therefore desirable for an improved way to actuate aerodynamic bodies.

According to a first aspect of the present invention there is provided a fluidic switch for deploying an aerodynamic body on a vehicle, the fluidic switch comprising: a chamber comprising a first opening for receiving incoming airflow to the vehicle at the fluidic switch; and the aerodynamic body restrained to the chamber; wherein the fluidic switch is configured such that, when the incoming airflow enters the chamber through the first opening stagnation pressure is built up in the chamber, the stagnation pressure applying a force to the aerodynamic body so that the fluidic switch moves the aerodynamic body away from the chamber from a retracted configuration towards a deployed configuration.

In some implementations, the fluidic switch may be configured such that, when the incoming airflow has a velocity at the point of exceeding a threshold velocity, the fluidic switch moves the aerodynamic body away from the chamber from the retracted configuration to the deployed configuration.

According to a second aspect of the present invention there is provided a fluidic switch for deploying an aerodynamic body on a vehicle, the fluidic switch comprising the aerodynamic body; wherein the fluidic switch is configured such that, when incoming airflow at the fluidic switch has a velocity at the point of exceeding a threshold velocity, the fluidic switch moves the aerodynamic body from a retracted configuration to a deployed configuration.

In some implementations, the fluidic switch may comprise a chamber comprising a first opening for receiving the incoming airflow, the aerodynamic body being restrained to the chamber; and wherein the fluidic switch may be configured such that, when the incoming airflow enters the chamber through the first opening stagnation pressure is built up in the chamber, the stagnation pressure applying a force to the aerodynamic body so that the fluidic switch moves the aerodynamic body away from the chamber from the retracted configuration to the deployed configuration.

In some implementations, the aerodynamic body may move from the retracted configuration to the deployed configuration in a direction transverse to the incoming airflow entering the chamber through the first opening.

In some implementations, the aerodynamic body may be restrained to the chamber by biasing means, the aerodynamic body being biased towards the chamber by a force of the biasing means. In some implementations, the biasing means may comprise one or more springs. In some implementations, the biasing means may comprise one or more helical springs, each helical spring being slidable on a respective sliding rail. In some implementations, the force applied to the aerodynamic body by the stagnation pressure may be applied against the force of the biasing means.

In some implementations, the aerodynamic body may be restrained to the chamber by locking mechanism configured to restrain the aerodynamic body until a minimum stagnation pressure force is reached.

In some implementations, the chamber may be sealed apart from the first opening so when the incoming airflow enters the chamber through the first opening the incoming airflow is restricted from exiting the chamber causing the stagnation pressure build up in the chamber such that the fluidic switch moves the aerodynamic body away from the chamber from the retracted configuration towards the deployed configuration.

In some implementations, the chamber may comprise a second opening such that when the incoming airflow enters the chamber through the first opening an outgoing airflow exits the chamber through the second opening.

In some implementations, the second opening may be arranged such that: below the threshold velocity, the difference between the mass flow of the incoming airflow through the first opening and the mass flow of the outgoing airflow through the second opening is below a threshold mass flow difference such that the aerodynamic body does not move to the deployed configuration; and at or above the threshold velocity, the difference between the mass flow of the incoming airflow through the first opening and the mass flow of the outgoing airflow through the second opening is above a threshold mass flow difference such that the aerodynamic body moves to the deployed configuration.

In some implementations, at a velocity at or above the threshold velocity, the outgoing airflow may be restricted from passing out of the chamber through the second opening due to the boundary layer of the outgoing airflow through the second opening.

In some implementations, the aerodynamic body may comprise: a first body part positioned inside of the chamber; a second body part positioned outside of the chamber; and a third body part connecting the first body part to the second body part.

In some implementations, the chamber may comprise a third opening. In some implementations, the third body part may extend through the third opening.

In some implementations, in the deployed configuration, the first body part may be in contact with the inside of the chamber such that the third opening is sealed by the first body part.

In some implementations, in the retracted configuration, the second body part may be in contact with the outside of the chamber such that the third opening is sealed by the second body part.

In some implementations, when the first body part is in contact with the inside of the chamber, a labyrinth seal may be formed around the third opening. **In** some implementations, when the second body part is in contact with the outside of the chamber, a labyrinth seal may be formed around the third opening.

In some implementations, the first body part may comprise marginally smaller cross section than the inner walls of chamber such that, when the aerodynamic body moves between the retracted configuration and the deployed configuration, the first body part moves within the inner walls of the chamber with a marginal gap between the first body part and the inner walls of the chamber.

In some implementations, the marginal gap may be arranged such that the incoming airflow is restricted from passing through the marginal gap. In some implementations, the incoming airflow may be restricted from passing through the marginal gap due to the boundary layer of the incoming airflow.

In some implementations, the fluidic switch may further comprise a filter covering the first opening.

In some implementations, the fluidic switch may further comprise a release mechanism configured to move the aerodynamic body from the deployed configuration to the retracted configuration. In some implementations, the release mechanism may comprise a fourth opening, the fourth opening being selectively openable to release the incoming flow from the chamber.

In some implementations, the aerodynamic body may be a seal. In some implementations, the seal may be configured for deployment in a gap between two further aerodynamic bodies such that, in the deployed configuration, the seal substantially fills the gap between the two further aerodynamic bodies. In some implementations, the fluidic switch may further comprise the two further aerodynamic bodies such that, in the deployed configuration, the seal substantially fills the gap between the two further aerodynamic bodies.

In some implementations, the threshold velocity may be between 140 and 160 kph.

According to a third aspect of the present invention there is provided a vehicle comprising the fluidic switch according to any preceding claim.

The present invention will now be described by way of example with reference to the accompanying drawings. In the drawings:
Figures 1a-e show an embodiment of a fluidic switch of the invention in a retracted configuration: Figure 1a shows a side cross-section; Figure 1b shows a top view; Figure 1c shows a front view; Figure 1d shows a front cross-section; and Figure 1e shows a back view.
Figures 2a-e show the embodiment of a fluidic switch of the invention in Figures 1a-e in a deployed configuration: Figure 2a shows a side cross-section; Figure 2b shows a top view; Figure 2c shows a front view; Figure 2d shows a front cross-section; and Figure 2e shows a back view.
Figures 3a-c show the fluidic switch of the invention implemented with two further aerodynamic bodies; Figure 3a shows a side view with the fluidic switch in a retracted configuration; Figure 3b shows a side view with the fluidic switch in a deployed configuration; and Figure 3c shows a top view with the fluidic switch in a deployed configuration.
Figure 4 shows a vehicle comprising a plurality of fluidic switches of the invention.
Figure 5 illustrates an example aerodynamic body displacement vs vehicle velocity plot for a first embodiment of the fluidic switch of the invention.
Figure 6 illustrates an example aerodynamic body displacement vs vehicle velocity plot for a second embodiment of the fluidic switch of the invention.

The following description is presented to enable any person skilled in the art to make and use the invention, and is provided in the context of a particular application.

Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The present invention relates to a fluidic switch for deploying an aerodynamic body on a vehicle.

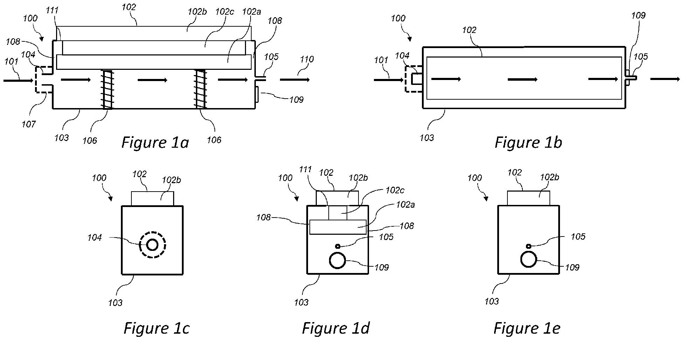

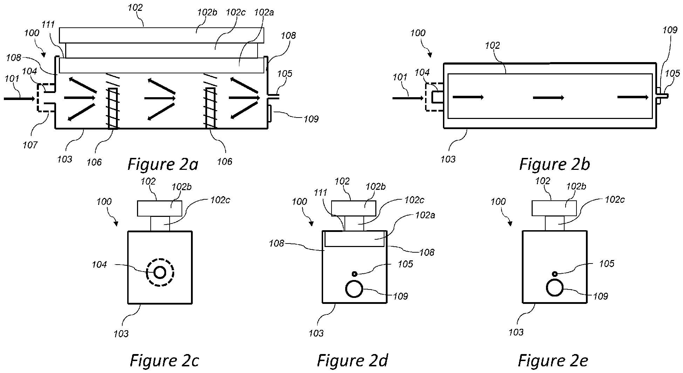

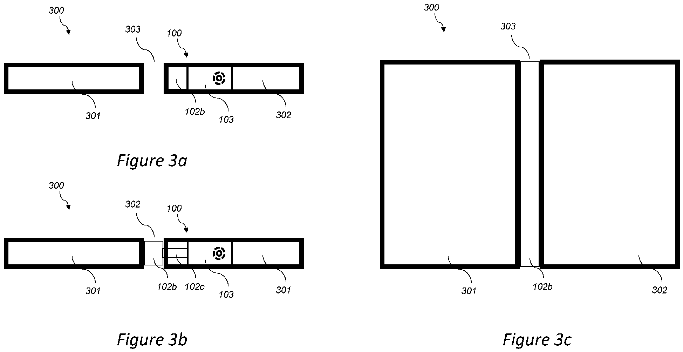

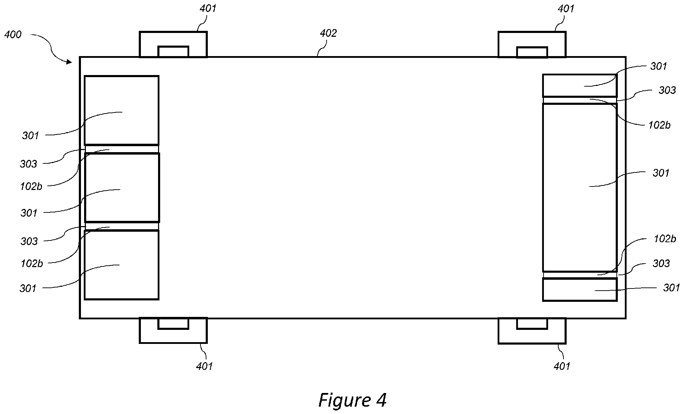

Figures 1a-e and 2a-e show an embodiment of the fluidic switch 100. Figures 3a-c show the fluidic switch 100 fitted to further aerodynamic bodies 301. Figure 4 shows where the fluidic switches 100 and aerodynamic bodies 301 are fitted to the vehicle 400.

The fluidic switch 100 may be configured to deploy an aerodynamic body 102. The fluidic switch 100 may comprise the aerodynamic body 102. Alternatively, the fluidic switch 100 may comprise a further component which drives the aerodynamic body 102. The fluidic switch 100 may be fitted to a vehicle 400 such that the fluidic switch 100 receives the incoming airflow 101 of the vehicle 400. The incoming airflow 101 may have the same velocity as the vehicle 400. In some cases, due to local velocity changes at the vehicle 400, the incoming airflow 101 may have a different velocity to the velocity of the vehicle 400. For example, upper surfaces of wings on the vehicle 400 may have a higher local airflow velocity than the free flow. In such a case, the incoming airflow 101 received by the fluidic switch 100 may be higher than the vehicle 400 velocity.

The working fluid of the fluidic switch 100 may be air. The air may be normal atmospheric air. The air may be provided by the incoming airflow 101 to the vehicle 400. The fluidic switch 100 may be used with different working fluids. The fluidic switch 100 may be compatible with different working fluids. Different working fluids may include water and oil. The dimensions of the components and openings described herein may be adapted for the different characteristics of the working fluids, such as density and viscosity.

The aerodynamic body 102 may be a seal 102. As shown in Figure 3, the seal 102 may be used to seal the gap 303 between two further aerodynamic bodies 301. The further aerodynamic bodies 301 may be a component used to control the incoming airflow 101. The further aerodynamic bodies 301 may comprise panels 301. The further aerodynamic bodies 301 may comprise a flap, slat, wing, duct or any other aerodynamic feature. Figure 3 illustrates a simple panel 301.

Alternatively, the aerodynamic body 102 itself may be a component used to control the incoming airflow 101. The aerodynamic body 102 itself may comprise a panel 102. The aerodynamic body 102 itself may comprise a flap, slat, wing, duct or any other aerodynamic feature. The aerodynamic body 102 being a seal 102 may itself also control the incoming airflow 101.

The aerodynamic body 102 may have a retracted configuration (illustrated in Figures 1a-e). The aerodynamic body 102 may have a deployed configuration (illustrated in Figures 2a-e).

In the seal 102 example described herein, the aerodynamic body 102 may be deployable the gap 303 between the two further aerodynamic bodies 301. In the retracted configuration, the aerodynamic body 102 may be partially or fully hidden with a further aerodynamic body 301 (illustrated in Figure 3a). In the deployed configuration, the aerodynamic body 102 may extend out of the further aerodynamic body 301 and partially or fully fill the gap between the further aerodynamic bodies 301 (illustrated in Figures 3b-c).

In the aerodynamic body 102 being a component used to control the incoming airflow 101 example described herein, the aerodynamic body 102 may be deployed to control the airflow over the aerodynamic body 102. For example, if the aerodynamic body 102 is a wing, then deployment of the aerodynamic body 102 may comprise altering the angle or position of the wing.

The aerodynamic body 102 may move from the retracted configuration to the deployed configuration in a direction transverse to the incoming flow 101. The aerodynamic body 102 may move from the retracted configuration to the deployed configuration in a direction transverse to the incoming flow 101 entering the chamber 103 through the first opening 104. For example, if the incoming flow 101 is in a direction along the length of the vehicle 400 when entering the first opening 104, the aerodynamic body 102 may deploy towards a side of the vehicle 400. This is illustrated in Figure 4. Alternatively, the aerodynamic body 102 may deploy in a different direction. The aerodynamic body 102 may deploy in any direction. The aerodynamic body 102 may deploy vertically. The aerodynamic body 102 may deploy in a direction towards the ground on which the vehicle is being driven. In this case, the aerodynamic body 102 may provide underbody aerodynamic guidance, such as part of a diffuser.

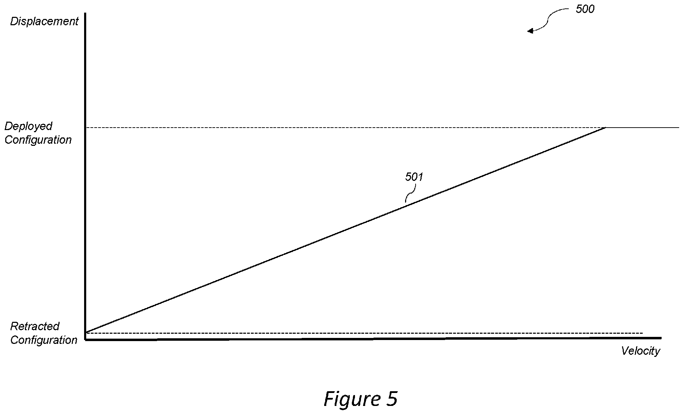

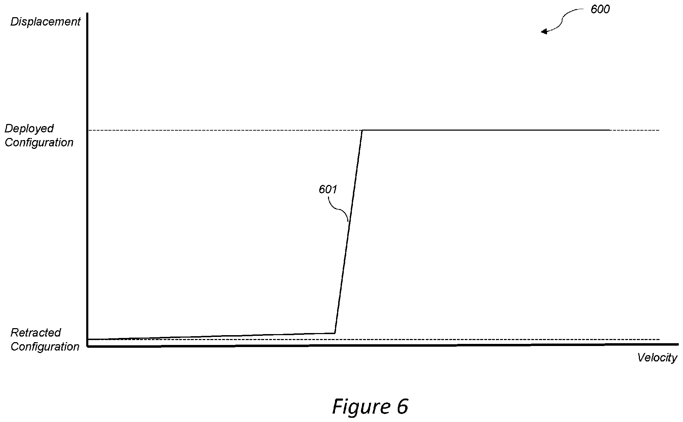

The fluidic switch 100 may be configured to move the aerodynamic body 102 from the retracted configuration toward/to in the deployed configuration in different ways. Figures 5 and 6 illustrate two different exemplary ways to deploy the aerodynamic body 102.

Figure 5 illustrates an example aerodynamic body displacement vs vehicle velocity plot 500 of a first example of how to deploy the aerodynamic body 102. As shown by the line 501, the aerodynamic body 102 may be gradually deployed from the retracted configuration to the deployed configuration. The deployment may gradually increase with the velocity of the vehicle. The gradual increase may be linear as shown in Figure 5. Alternatively, the increase may be non-linear, such as proportional to velocity squared. The vehicle velocity increases the incoming airflow 101 velocity. Forces in the passive fluidic switch 100 may be dependent on the incoming airflow 101 velocity at the fluidic switch 100. As the incoming airflow 101 velocity increases, the forces in the fluidic switch 100 may increase. The forces in the fluidic switch 100 may be applied to the aerodynamic body 102. As the incoming airflow 101 velocity increases, the aerodynamic body 102 may gradually move towards the deployed configuration. The aerodynamic body 102 may remain in the deployed configuration at incoming airflow 101 velocities above the airflow velocity 101 at which the aerodynamic body reached the deployed configuration. Put simply, the fluidic switch 100 may be configured to passively move the aerodynamic body 102 from the retracted configuration towards the deployed configuration as the incoming velocity 101 increases.

Figure 6 illustrates an example aerodynamic body displacement vs vehicle velocity plot 600 of a second example of how to deploy the aerodynamic body 102. As shown by the line 601, there may be three steps to the deployment of the aerodynamic body 102:
1. The aerodynamic body 102 may initially be gradually deployed from the retracted configuration (shallow gradient of line 601). The initial deployment may gradually increase with the velocity of the vehicle. The gradual increase may be linear as shown in Figure 6. Alternatively, the increase may be non-linear, such as proportional to velocity squared. The vehicle velocity increases the incoming airflow 101 velocity. Forces in the passive fluidic switch 100 may be dependent on the incoming airflow 101 velocity at the fluidic switch 100. As the incoming airflow 101 velocity increases, the forces in the fluidic switch 100 may increase. The forces in the fluidic switch 100 may be applied to the aerodynamic body 102. As the incoming airflow 101 velocity increases, the aerodynamic body 102 may gradually move towards the deployed configuration.
   Alternatively, the aerodynamic body 102 may remain in the retracted configuration during the initial section in Figure 6. This would instead be illustrated by a zero gradient in Figure 6. The aerodynamic body 102 may not move from the retracted configuration until a threshold velocity is reached.
2. The aerodynamic body 102 may suddenly rapidly deploy (steep gradient of line 601). The subsequent deployment may rapidly increase with the velocity of the vehicle. When the incoming airflow has a velocity at the point of exceeding a threshold velocity, there may be a sudden increase in the rate of deployment. At the point the incoming airflow exceeds the threshold velocity, the forces in the passive fluidic switch 100 may suddenly increase rapidly with incoming airflow 101 velocity at the fluidic switch 100. Example reasons for the rapid increase in forces are described herein. The forces in the fluidic switch 100 may be applied to the aerodynamic body 102. As the incoming airflow 101 velocity exceeds the threshold velocity, the aerodynamic body 102 may rapidly move to the deployed configuration.
3. The aerodynamic body 102 may remain in the deployed configuration at incoming airflow 101 velocities above the threshold velocity (flat portion of 601).

Put simply, the fluidic switch 100 may be configured, when incoming airflow 101 at the fluidic switch 100 has a velocity at the point of exceeding a threshold velocity, to passively move the aerodynamic body 102 to the deployed configuration. This movement may be from the retracted configuration, or near the retracted configuration (see Figure 6).

Figures 1a-e and 2a-e illustrate an exemplary embodiment of a fluidic switch 100 configured to deploy the aerodynamic body 102. Other embodiments may be suitable for providing a fluidic switch 100 configured to deploy the aerodynamic body 102 in line with the examples described with reference to Figures 5 and 6.

The fluidic switch 100 may comprise a chamber 103. The chamber 103 may enclose a volume. The chamber 103 may comprise a first opening 104 for receiving the incoming airflow 101 at the fluidic switch 100. The incoming airflow 101 may enter the chamber 103 through the first opening 104. The incoming airflow 101 may continually fill the chamber 103. As the incoming airflow 101 fills the chamber 103 the stagnation pressure in the chamber 103 may build up. The stagnation pressure inside the chamber 103 may be higher than the pressure outside of the chamber 103. The stagnation pressure build up may generate a force. The force may be in a direction away from the chamber 103. The force may be in a direction away from the high pressure of the chamber 103 towards the low pressure outside of the chamber 103. The stagnation pressure build up may cause the volume in the chamber 103 to increase. The stagnation pressure force may be applied to the aerodynamic body 102. The stagnation pressure force may be directly applied to the aerodynamic body 102. For example, a pressurized airflow in the chamber 103 may directly contact and act on a portion of the aerodynamic body 102. The movement of the aerodynamic body 102 may cause the volume of the chamber 103 to increase. Alternatively, the stagnation pressure force may be indirectly applied to the aerodynamic body 102. For example, a pressurized airflow in the chamber 103 may directly contact an intermediate component which in turn acts on a portion of the aerodynamic body 102. The movement of the intermediate component may cause the volume of the chamber 103 to increase. The application of the stagnation pressure force to the aerodynamic body 102 may move the aerodynamic body 102 from the retracted configuration towards the deployed configuration.

The aerodynamic body 102 may be restricted from moving any further than the retracted configuration and the deployed configuration. Put another way, the aerodynamic body 102 may only be able to move between the retracted configuration and the deployed configuration. The movement may be limited by mechanically limiting the range of travel of the aerodynamic body 102. In this way, even at incoming airflow 101 velocities above the threshold velocity, the aerodynamic body 102 may be limited from traveling further than the deployed configuration. Similarly, even at zero incoming airflow 101 velocity, the aerodynamic body 102 may be limited from traveling further than the retracted configuration.

The first opening 104 may prevent the incoming airflow 101 from exiting the chamber 103 through the first opening 104. The first opening 104 may comprise a valve to prevent the incoming airflow 101 from exiting the chamber 103 through the first opening 104. This may aid in the rate at which the stagnation pressure builds up inside the chamber 103.

The fluidic switch 100 may comprise a filter 107. The filter 107 may partially or fully cover the first opening 104. The filter 107 may reduce the amount of debris or any particles entering the chamber 103. When the fluidic switch 100 is fitted to a vehicle 400, particularly at the front of the vehicle 400, there may be a large amount of debris from the road. The filter 107 may significantly improve the efficiency of the fluidic switch 100 by reducing the amount of debris in the chamber 103, which may improve the consistency of the force applied to the aerodynamic body 102.

The aerodynamic body 102 may be restrained to the chamber 103. The aerodynamic body 102 may be connected to the chamber 103. The aerodynamic body 102 may be movably attached to the chamber 103. The aerodynamic body 102 may be attached to the chamber 103 by attachment means. Moving the aerodynamic body 102 from the retracted configuration to the deployed configuration may move the aerodynamic body 102 away from the chamber 103. Moving the aerodynamic body 102 from the retracted configuration to the deployed configuration may move the aerodynamic body 102 against the attachment means.

The aerodynamic body 102 may be restrained to the chamber 103 by locking mechanism. For example, the aerodynamic body 102 may be locked into the chamber 103. The lock may comprise wedging the aerodynamic body 102 into the chamber 103. The locking mechanism may restrain the aerodynamic body 102 in the retracted configuration. A minimum force may be required to remove the aerodynamic body 102 from the locking mechanism. The minimum force may correspond the threshold velocity. At the threshold velocity, the stagnation pressure in the chamber 103 may be sufficient such that the stagnation pressure force on the aerodynamic body 102 exceeds the minimum force. As such, the aerodynamic body 102 may be moved from the retracted configuration to the deployed configuration.

The minimum force of the locking mechanism may be varied. For example, different friction surfaces with different friction coefficients may be used. The minimum force of the locking mechanism may be altered depending on the implementation. The minimum force of the locking mechanism may be varied to change the threshold velocity. For example, increasing the friction may increase the threshold velocity.

The locking mechanism may be reversable. For example, once the aerodynamic body 102 is released, the aerodynamic body 102 may be reattached to the locking mechanism. This may provide a multiple-use fluidic switch 100. The locking mechanism may be irreversible. For example, once the aerodynamic body 102 is released, the aerodynamic body 102 may not be reattached to the locking mechanism. This may provide a one-use fluidic switch 100.

The aerodynamic body 102 may be restrained to the chamber 103 by biasing means 106. The aerodynamic body 102 may be biased towards the chamber 103 by a force of the biasing means 106. The force applied to the aerodynamic body 102 by the stagnation pressure may be applied against the force of the biasing means 106. The biasing means 106 may comprise an elastic element. The biasing means 106 may comprise one or more springs. The springs may be helical springs. Alternatively, or in addition, the springs may be leaf springs. The helical spring(s) may be mounted on the chamber 103. The helical spring(s) may be slidable on respective sliding rails. Sliding the springs on the rails may significantly reduce the friction of the movement of the springs. The force of the biasing means 106 may be varied. For example, different springs with different spring constants may be used. The force of the biasing means 106 may be altered depending on the implementation. The force of the biasing means 106 may be varied to change the threshold velocity. For example, increasing the spring constant may increase the threshold velocity.

Preferably, for a racing car, the threshold velocity may be between 125kph and 175kph, more preferably the threshold velocity may be between 140kph and 160kph, even more preferably the threshold velocity may be 150kph. In this way, the aerodynamic body 102 may deploy at speeds which increased downforce is required.

The chamber 103 may be sealed apart from the first opening 104. For example, the chamber 103 may comprise the first opening 104 and no further openings. In this way, when the incoming airflow 101 enters the chamber 103 through the first opening 104 the incoming airflow 102 is restricted from exiting the chamber 103. This causes stagnation pressure build up in the chamber 103. The stagnation pressure build up may generate a force. The stagnation pressure force may be applied to the aerodynamic body 102. The application of the stagnation pressure force to the aerodynamic body 102 may move the aerodynamic body 102 from the retracted configuration towards the deployed configuration. In this implementation, the stagnation pressure may build up gradually as illustrated in the example in Figure 5.

In some implementations, the incoming airflow 101 may be restricted from exiting the first opening 104, such as by a valve as described herein. In this implementation, the stagnation pressure may build up gradually as illustrated in the example in Figure 5, but with a steeper gradient than if the valve was not fitted. This is because the incoming airflow 101 is prevented from exiting the chamber 103, and so the stagnation pressure builds up more quickly. In a situation where the chamber 103 is fully sealed, such as because of the valve in the first opening 103 and no further openings, the fluidic switch 100 may not be reversable. Because the airflow cannot exit the chamber 103, the aerodynamic body 102 may not be able to revert to the retracted configuration. This may provide a one-use fluidic switch 100.

Alternatively, as outlined in Figures 1a-e and 2a-e, the chamber 103 may comprise a second opening 105. The incoming airflow 101 may enter the chamber 103 through the first opening 104 and outgoing airflow 110 may exit the chamber 103 through the second opening 105. The incoming airflow 101 may have an incoming mass flow. The outgoing airflow 110 may have an outgoing mass flow. As illustrated in Figures 1a-e and 2a-e, the first opening 104 and the second opening 105 may be on opposite ends of the chamber 103. Alternatively, the first opening 104 and the second opening 105 may be positioned in any position around the chamber 103. The second opening 104 may be arranged so the airflow characteristics through the chamber 103 may vary above and below the threshold velocity.

Below the threshold velocity, the difference between the incoming mass flow through the first opening 104 and the outgoing mass flow through the second opening 105 may be below a threshold mass flow difference. In this situation, the incoming airflow 101 may generally freely enter the chamber 103 through the first opening 104, and the outgoing airflow 110 may generally freely exit the chamber 103 through the second opening 104. The outgoing airflow 110 mass flow may be slightly lower than the incoming airflow 101 mass flow. This may be because of slight restrictions on the outgoing airflow 110 through the second opening 105. Additionally, some of incoming airflow 101 may become trapped in parts of the chamber 101. The small difference between the incoming airflow 101 mass flow and the outgoing airflow 110 mass flow may cause a slight build up of stagnation pressure in the chamber 103. The slight build up in stagnation pressure may cause a small force to be applied to the aerodynamic body 102. There may be a small positive difference in pressure between the stagnation pressure inside the chamber 103 and the ambient pressure outside of the chamber 103.

In the locking mechanism implementation in which a minimum force is required to move the aerodynamic body 102 from the chamber 103, the small force may not be sufficient to move the aerodynamic body 102 from the chamber 103. Thus, the aerodynamic body 102 may remain in the retracted configuration.

In the biasing means implementation in which aerodynamic body 102 is biased towards the chamber 103, the small force may cause the aerodynamic body 102 to be moved slightly from the retracted configuration (see initial deployment section with shallow gradient in Figure 6). That said, the small force may not be sufficient to move the aerodynamic body 102 all the way from the retracted configuration to the deployed configuration.

Above the threshold velocity, the difference between the incoming mass flow through the first opening 104 and the outgoing mass flow through the second opening 105 may be above a threshold mass flow difference. In this situation, the incoming airflow 101 may generally freely enter the chamber 103 through the first opening 104, but the outgoing airflow 110 may be restricted from exiting the chamber 103 through the second opening 104. Above the threshold velocity, the outgoing airflow 110 through the second opening 104 may stay the same as below the threshold velocity, reduce compared to below the threshold velocity, or reduce to zero airflow. In each case, the difference between the incoming airflow 101 mass flow and the outgoing airflow 110 mass flow will increase. This significant increase in the difference may go above the threshold different in mass flow. The large difference between the incoming airflow 101 mass flow and the outgoing airflow 110 mass flow may cause a rapid build up of stagnation pressure in the chamber 103. The rapid build up in stagnation pressure may cause a large force to be applied to the aerodynamic body 102. There may be a large positive difference in pressure between the stagnation pressure inside the chamber 103 and the ambient pressure outside of the chamber 103. The large force may cause the aerodynamic body 102 to be moved from the retracted configuration to the deployed configuration (see rapid deployment section with steep gradient in Figure 6).

In the locking mechanism implementation in which a minimum force is required to move the aerodynamic body 102 from the chamber 103, the large force may be sufficient to move the aerodynamic body 102 from the chamber 103. Thus, the aerodynamic body 102 may move away from the retracted configuration and towards the deployed configuration.

In the biasing means implementation in which aerodynamic body 102 is biased towards the chamber 103, the large force may cause the aerodynamic body 102 to be moved from the retracted configuration (see rapid deployment section with steep gradient in Figure 6). The large force may be sufficient to move the aerodynamic body 102 all the way from the retracted configuration to the deployed configuration.

The outgoing airflow 110 through the second opening 105 may be more restricted than the incoming airflow 101 through the first opening 104. The significant increase in restriction through the second opening 105 may be due to the boundary layer effect through the second opening 105 at and above the threshold velocity. The outgoing airflow 110 comprises a boundary layer. Above the threshold velocity, the boundary layer of the outgoing airflow 110 may increase in size to a point at which is it highly restricted from exiting through the second opening 105. At a velocity at or above the threshold velocity, the outgoing airflow 110 is restricted from passing out of the chamber 103 through the second opening 105 due to the boundary layer of the outgoing airflow 110 through the second opening 110. This restriction may cause a rapid increase in the stagnation pressure in the chamber 103. The rapid increase in the stagnation pressure may cause a force to be applied to the aerodynamic body 102 which moves the aerodynamic body 102 from the retracted configuration to the deployed configuration.

The second opening 105 may be smaller than the first opening 104. The second opening 105 may be sized so as to restrict the outgoing airflow 110 through the second opening 105. The second opening 105 may be sized such that the boundary layer of the outgoing airflow 110 causes significant restriction through the second opening 105 at or above the threshold velocity. The first opening 104 may comprise a diameter of 10mm to 100mm. The second opening 105 may comprise a diameter of 0.01mm to 50mm. The openings 104, 105 may be sized depending on the type of working fluid and the threshold velocity.

Additionally, the aerodynamic body 102 may be arranged so that: in the deployed configuration, the aerodynamic body 102 covers the second opening 105; and in the retracted configuration, the aerodynamic body 102 does not cover the second opening 105. For example, the aerodynamic body 102 may extend down the side of the chamber 103 towards the second opening 105. In this way, the outgoing airflow 110 may be restricted from exiting through the second opening 105 in the deployed configuration, and the outgoing airflow 110 may pass through the second opening 105 in the retracted configuration. This arrangement may provide further blockage to the boundary layer blockage in the second opening 105 described herein. This arrangement may also be used to provide a secondary deployment at a secondary threshold velocity. For example, the aerodynamic body 102 may deploy as described herein, and then deploy for a second time due to further build up in the chamber 103 from the aerodynamic body 102 covering the second opening 105.

The aerodynamic body 102 may be positioned outside of the chamber 103. In such an implementation, the stagnation pressure force may be applied indirectly to the aerodynamic body 102. The stagnation pressure force may be applied to the aerodynamic body 102 through an intermediate component. For example, a component inside the chamber 103 may be moved by the stagnation pressure force, which in turn moves the aerodynamic body 102.

Alternatively, as illustrated in Figures 1a-e and 2a-e, the aerodynamic body 102 may be partially positioned inside of the chamber 103. The aerodynamic body 102 may be partially positioned inside of the chamber 103 in the retracted configuration. The aerodynamic body 102 may be partially positioned inside of the chamber 103 in the deployed configuration. In these implementations, the stagnation pressure force may be applied directly to the aerodynamic body 102. The movement of the aerodynamic body 102 in the chamber 103 may cause the volume of the chamber 103 to increase.

The aerodynamic body 102 may comprise a first body part 102a. The first body part 102a may be positioned inside of the chamber 103. The first body part 102a may be positioned inside of the chamber 103 in the retracted configuration. The first body part 102a may be positioned inside of the chamber 103 in the deployed configuration. The aerodynamic body 102 may comprise a second body part 102b. The second body part 102b may be positioned outside of the chamber 103. The second body part 102b may be positioned outside of the chamber 103 in the retracted configuration. The second body part 102b may be positioned outside of the chamber 103 in the deployed configuration. The first body part 102a may be connected to the second body part 102b by a third body part 102c. The third body part 102c may be partially positioned inside of the chamber 103. The third body part 102c may be partially positioned inside of the chamber 103 in the retracted configuration. The third body part 102c may be partially positioned inside of the chamber 103 in the deployed configuration.

The chamber 103 may comprise a third opening 111. The third body part 102c may extend through the third opening 111. As the aerodynamic body 102 moves, the third body part 102c may move in and out of the third opening 111. The third opening 111 may seal around the third body part 102c. In this way, air in the chamber 103 may not be released from the third opening 111. Alternatively, there may be a gap around the third body part 102c in the third opening 111. In this way, air may exit the chamber 103 through the third opening 111 in the same was as described herein as the second opening 105.

As shown in Figure 1a, in the retracted configuration, the second body part 102b may be in contact with the outside of the chamber 103. The outside of the chamber 103 may prevent the second body part 102b, and so the remainder of the aerodynamic body 102, from moving further into the chamber 103 than the retracted configuration. In the retracted configuration, the second body part 102b may be in contact with the inside of the chamber 103 such that the third opening 111 is sealed by the second body part 102b. In this way, the air in the chamber 103 is not released from the third opening 111. This may help to keep the stagnation pressure force up, and keep the aerodynamic body 102 in the retracted configuration. When the second body part 102b is in contact with the outside of the chamber 203, this may form a labyrinth seal around the third opening 111. Alternatively, the second body part 102b may not contact the outside of the chamber 203.

As shown in Figure 2a, in the deployed configuration, the first body part 102a may be in contact with the inside of the chamber 103. The inside of the chamber 103 may prevent the first body part 102c, and so the remainder of the aerodynamic body 102, from moving further away from the chamber 103 than the deployed configuration. In the deployed configuration, the first body part 102a may be in contact with the inside of the chamber 103 such that the third opening 111 is sealed by the first body part 102a. In this way, the air in the chamber 103 is not released from the third opening 111. This may help to keep the stagnation pressure force up, and keep the aerodynamic body 102 in the deployed configuration. When the first body part 102a is in contact with the inside of the chamber 203, this may form a labyrinth seal around the third opening 111.

The first body part 102a and the inside of the chamber 103 may comprise corresponding cross sections. For example, both may comprise rectangular cross sections as shown in Figures 1a-e and 2a-e. The first body part 102a may have a marginally smaller cross section than the inside of the chamber 103. In this way, when the aerodynamic body 102 moves between the retracted configuration and the deployed configuration, the first body part 102a moves within the inner walls of the chamber 103 with a marginal gap 108 between the first body part 102a and the inner walls of the chamber 103. The gap 108 may be filled with a seal to stop air exiting through the 108.

Alternatively, the gap 108 may be sized so as to restrict the air from the chamber 103 going through the gap 108. The gap 108 may be sized such that the boundary layer of the air in the chamber 103 causes significant restriction through the gap 108. The gap 108 may comprise a thickness of 0.01mm to 1mm. The gap 108 may be sized depending on the type of working fluid and the threshold velocity. Avoiding the need for a seal in the gap 108 can reduce the friction force on the third body part 102c. The forces on the aerodynamic body 102 may be quite low, and so reducing the friction force on the third body part 102c may be important.

The stagnation pressure force may be applied to the first body part 102a. The movement of the first body part 102a may cause the volume of the chamber 103 to change size. The stagnation pressure increase may cause expansion of the chamber 103 volume causing the first body part 102 to move from the retracted configuration towards the deployed configuration.

The fluidic switch 100 may comprise a release mechanism 109. The release mechanism 109 may be configured to move the aerodynamic body 102 from the from the deployed configuration to the retracted configuration. The release mechanism 109 may be configured to move the aerodynamic body 102 from the from the deployed configuration to the retracted configuration even when the incoming airflow 101 is above the threshold velocity. The release mechanism 109 may comprise a fourth opening 109 which is selectively openable. The fourth opening 109 may be configured so that it can be opened and closed. The fourth opening 109 may release most of the air from the chamber 103 when opened. Releasing most of the air from the chamber 103 will significantly reduce the stagnation pressure, reducing the force on the aerodynamic body 102, and so moving the aerodynamic body 102 from the from the deployed configuration to the retracted configuration. The fourth opening 100 may be closed by a lid or cap. The lid or cap may be mechanically actuated. The release mechanism 109 may be controllable by the driver. The release mechanism 109 may be controllable by the vehicle 400 control system.

The fluidic switch 100 described herein may be implemented on a vehicle 400, such as a car. In particular, the fluidic switch 100 may be implemented on a sports car or racing car in which there are requirements for improved aerodynamics. A vehicle 400 may comprise the fluidic switch 100 described herein.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

### ANNEX

Some numbered statements are provided below, which form part of this disclosure:
1. A fluidic switch for deploying an aerodynamic body on a vehicle, the fluidic switch comprising:
   a chamber comprising a first opening for receiving incoming airflow at the fluidic switch; and
   the aerodynamic body restrained to the chamber;
   wherein the fluidic switch is configured such that, when the incoming airflow enters the chamber through the first opening stagnation pressure is built up in the chamber, the stagnation pressure applying a force to the aerodynamic body so that the fluidic switch passively moves the aerodynamic body away from the chamber from a retracted configuration towards a deployed configuration.
2. A fluidic switch according to statement 1, wherein the fluidic switch is configured such that, when the incoming airflow has a velocity at the point of exceeding a threshold velocity, the fluidic switch passively moves the aerodynamic body away from the chamber from the retracted configuration to the deployed configuration.
3. A fluidic switch for deploying an aerodynamic body on a vehicle, the fluidic switch comprising the aerodynamic body; wherein the fluidic switch is configured such that, when incoming airflow at the fluidic switch has a velocity at the point of exceeding a threshold velocity, the fluidic switch passively moves the aerodynamic body from a retracted configuration to a deployed configuration.
4. A fluidic switch according to statement 3, wherein the fluidic switch comprises a chamber comprising a first opening for receiving the incoming airflow, the aerodynamic body being restrained to the chamber; and wherein the fluidic switch is configured such that, when the incoming airflow enters the chamber through the first opening stagnation pressure is built up in the chamber, the stagnation pressure applying a force to the aerodynamic body so that the fluidic switch passively moves the aerodynamic body away from the chamber from the retracted configuration to the deployed configuration.
5. A fluidic switch according to any preceding statement, wherein the aerodynamic body moves from the retracted configuration to the deployed configuration in a direction transverse to the incoming airflow entering the chamber through the first opening.
6. A fluidic switch according to any preceding statement, wherein the aerodynamic body is restrained to the chamber by biasing means, the aerodynamic body being biased towards the chamber by a force of the biasing means.
7. A fluidic switch according to statement 6, wherein the biasing means comprises one or more springs.
8. A fluidic switch according to statement 7, wherein the biasing means comprises one or more helical springs, each helical spring being slidable on a respective sliding rail.
9. A fluidic switch according to any of statements 6 to 8 when dependent on statement 1 or 4, wherein the force applied to the aerodynamic body by the stagnation pressure is applied against the force of the biasing means.
10. A fluidic switch according to any preceding statement when dependent on statement 1 or 4, wherein the aerodynamic body is restrained to the chamber by locking mechanism configured to restrain the aerodynamic body until a minimum stagnation pressure force is reached.
11. A fluidic switch according to any preceding statement when dependent on statement 1 or 4, wherein the chamber is sealed apart from the first opening so when the incoming airflow enters the chamber through the first opening the incoming airflow is restricted from exiting the chamber causing the stagnation pressure build up in the chamber such that the fluidic switch passively moves the aerodynamic body away from the chamber from the retracted configuration towards the deployed configuration.
12. A fluidic switch according to any of statement 1 to 10 when dependent on statement 1 or 4, wherein the chamber comprises a second opening such that when the incoming airflow enters the chamber through the first opening an outgoing airflow exits the chamber through the second opening.
13. A fluidic switch according to statement 12, wherein the second opening is arranged such that:
   below the threshold velocity, the difference between the mass flow of the incoming airflow through the first opening and the mass flow of the outgoing airflow through the second opening is below a threshold mass flow difference such that the aerodynamic body does not move to the deployed configuration; and
   at or above the threshold velocity, the difference between the mass flow of the incoming airflow through the first opening and the mass flow of the outgoing airflow through the second opening is above a threshold mass flow difference such that the aerodynamic body moves to the deployed configuration.
14. A fluidic switch according to statement 13, wherein, at a velocity at or above the threshold velocity, the outgoing airflow is restricted from passing out of the chamber through the second opening due to the boundary layer of the outgoing airflow through the second opening.
15. A fluidic switch according to any preceding statement when dependent on statement 1 or 4, wherein the aerodynamic body comprises: a first body part positioned inside of the chamber; a second body part positioned outside of the chamber; and a third body part connecting the first body part to the second body part.
16. A fluidic switch according to statement 15, wherein the chamber comprises a third opening, the third body part extending through the third opening.
17. A fluidic switch according to statement 16, wherein, in the deployed configuration, the first body part is in contact with the inside of the chamber such that the third opening is sealed by the first body part.
18. A fluidic switch according to statement 16 or 17, wherein, in the retracted configuration, the second body part is in contact with the outside of the chamber such that the third opening is sealed by the second body part.
19. A fluidic switch according to statement 17 or 18, wherein, when the first body part is in contact with the inside of the chamber, a labyrinth seal is formed around the third opening; and/or wherein, when the second body part is in contact with the outside of the chamber, a labyrinth seal is formed around the third opening.
20. A fluidic switch according to any of statements 15 to 19, wherein the first body part comprises marginally smaller cross section than the inner walls of chamber such that, when the aerodynamic body moves between the retracted configuration and the deployed configuration, the first body part moves within the inner walls of the chamber with a marginal gap between the first body part and the inner walls of the chamber.
21. A fluidic switch according to statement 20, wherein the marginal gap is arranged such that the incoming airflow is restricted from passing through the marginal gap.
22. A fluidic switch according to statement 21, wherein the incoming airflow is restricted from passing through the marginal gap due to the boundary layer of the incoming airflow.
23. A fluidic switch according to any preceding statement when dependent on statement 1 or 4, wherein the fluidic switch further comprises a filter covering the first opening.
24. A fluidic switch according to any preceding statement, wherein the fluidic switch further comprises a release mechanism configured to move the aerodynamic body from the deployed configuration to the retracted configuration.
25. A fluidic switch according to statement 24 when dependent on statement 11, wherein the release mechanism comprises a fourth opening, the fourth opening being selectively openable to release the incoming flow from the chamber.
26. A fluidic switch according to any preceding statement, wherein the aerodynamic body is a seal.
27. A fluidic switch according to statement 26, wherein the seal is configured for deployment in a gap between two further aerodynamic bodies such that, in the deployed configuration, the seal substantially fills the gap between the two further aerodynamic bodies.
28. A fluidic switch according to statement 27, further comprising the two further aerodynamic bodies such that, in the deployed configuration, the seal substantially fills the gap between the two further aerodynamic bodies.
29. A fluidic switch according to any of statements 2 to 28 when dependent on statement 2, wherein the threshold velocity is between 140 and 160 kph.
30. A vehicle comprising the fluidic switch according to any preceding statement.

## Claims

1. A fluidic switch for deploying an aerodynamic body on a vehicle, the fluidic switch comprising:
a chamber comprising a first opening for receiving incoming airflow to the vehicle at the fluidic switch; and
the aerodynamic body restrained to the chamber;
wherein the fluidic switch is configured such that, when the incoming airflow enters the chamber through the first opening stagnation pressure is built up in the chamber, the stagnation pressure applying a force to the aerodynamic body so that the fluidic switch moves the aerodynamic body away from the chamber from a retracted configuration towards a deployed configuration.

2. A fluidic switch according to claim 1, wherein the fluidic switch is configured such that, when the incoming airflow has a velocity at the point of exceeding a threshold velocity, the fluidic switch moves the aerodynamic body away from the chamber from the retracted configuration to the deployed configuration, optionally wherein the threshold velocity is between 140 and 160 kph.

3. A fluidic switch for deploying an aerodynamic body on a vehicle, the fluidic switch comprising the aerodynamic body; wherein the fluidic switch is configured such that, when incoming airflow at the fluidic switch has a velocity at the point of exceeding a threshold velocity, the fluidic switch moves the aerodynamic body from a retracted configuration to a deployed configuration.

4. A fluidic switch according to claim 3, wherein the fluidic switch comprises a chamber comprising a first opening for receiving the incoming airflow, the aerodynamic body being restrained to the chamber; and wherein the fluidic switch is configured such that, when the incoming airflow enters the chamber through the first opening stagnation pressure is built up in the chamber, the stagnation pressure applying a force to the aerodynamic body so that the fluidic switch moves the aerodynamic body away from the chamber from the retracted configuration to the deployed configuration, optionally wherein the fluidic switch further comprises a filter covering the first opening.

5. A fluidic switch according to any preceding claim, wherein the aerodynamic body moves from the retracted configuration to the deployed configuration in a direction transverse to the incoming airflow entering the chamber through the first opening.

6. A fluidic switch according to any preceding claim, wherein the aerodynamic body is restrained to the chamber by biasing means, the aerodynamic body being biased towards the chamber by a force of the biasing means, optionally wherein the biasing means comprises one or more springs, and/or wherein the force applied to the aerodynamic body by the stagnation pressure is applied against the force of the biasing means.

7. A fluidic switch according to any preceding claim when dependent on claim 1 or 4, wherein the aerodynamic body is restrained to the chamber by locking mechanism configured to restrain the aerodynamic body until a minimum stagnation pressure force is reached, and/or
wherein the chamber is sealed apart from the first opening so when the incoming airflow enters the chamber through the first opening the incoming airflow is restricted from exiting the chamber causing the stagnation pressure build up in the chamber such that the fluidic switch moves the aerodynamic body away from the chamber from the retracted configuration towards the deployed configuration.

8. A fluidic switch according to any of claim 1 to 6 when dependent on claim 1 or 4, wherein the chamber comprises a second opening such that when the incoming airflow enters the chamber through the first opening an outgoing airflow exits the chamber through the second opening.

9. A fluidic switch according to claim 8, wherein the second opening is arranged such that:
below the threshold velocity, the difference between the mass flow of the incoming airflow through the first opening and the mass flow of the outgoing airflow through the second opening is below a threshold mass flow difference such that the aerodynamic body does not move to the deployed configuration; and
at or above the threshold velocity, the difference between the mass flow of the incoming airflow through the first opening and the mass flow of the outgoing airflow through the second opening is above a threshold mass flow difference such that the aerodynamic body moves to the deployed configuration, optionally wherein, at a velocity at or above the threshold velocity, the outgoing airflow is restricted from passing out of the chamber through the second opening due to the boundary layer of the outgoing airflow through the second opening.

10. A fluidic switch according to any preceding claim when dependent on claim 1 or 4, wherein the aerodynamic body comprises: a first body part positioned inside of the chamber; a second body part positioned outside of the chamber; and a third body part connecting the first body part to the second body part, and wherein the chamber comprises a third opening, the third body part extending through the third opening.

11. A fluidic switch according to claim 10, wherein, in the deployed configuration, the first body part is in contact with the inside of the chamber such that the third opening is sealed by the first body part, and/or wherein, in the retracted configuration, the second body part is in contact with the outside of the chamber such that the third opening is sealed by the second body part.

12. A fluidic switch according to claim 10 or 11, wherein the first body part comprises marginally smaller cross section than the inner walls of chamber such that, when the aerodynamic body moves between the retracted configuration and the deployed configuration, the first body part moves within the inner walls of the chamber with a marginal gap between the first body part and the inner walls of the chamber, optionally wherein the marginal gap is arranged such that the incoming airflow is restricted from passing through the marginal gap optionally due to the boundary layer of the incoming airflow.

13. A fluidic switch according to any preceding claim, wherein the fluidic switch further comprises a release mechanism configured to move the aerodynamic body from the deployed configuration to the retracted configuration.

14. A fluidic switch according to any preceding claim, wherein the aerodynamic body is a seal, optionally wherein the seal is configured for deployment in a gap between two further aerodynamic bodies such that, in the deployed configuration, the seal substantially fills the gap between the two further aerodynamic bodies.

15. A vehicle comprising the fluidic switch according to any preceding claim.
